# EUROPEAN PATENT SPECIFICATION

(11) **EP 1 390 270 B1**
(45) Date of publication and mention of the grant of the patent: **16.08.2006**
(21) Application number: 02727721.9
(22) Date of filing: 16.05.2002
(51) Int. Cl.: B65D 65/46

(54) **INJECTION MOULDED CONTAINERS**
SPRITZGEGOSSENER BEHÄLTER
CONTENEURS MOULES PAR INJECTION

(30) Priority: 17.05.2001 GB 0112048
(43) Date of publication of application: 25.02.2004
(73) Proprietor: Reckitt Benckiser (UK) Limited, Slough, Berkshire SL1 3UH (GB)
(72) Inventor: FREGONESE, Daniele Benckiser Produktions GmbH, Ludwigshafen 67059 (DE); GUZMANN, Marcus, Leimen 69181 (DE); WIEDEMANN, Ralf Benckiser Produktions GmbH, Ludwigshafen 67059 (DE)
(74) Representative: Brown, Andrew Stephen
(86) International application number: PCT/GB2002/002230
(87) International publication number: WO 2002/092454

(56) References cited:
- EP-A- 0 284 334
- WO-A-93/08095
- WO-A-95/19921
- WO-A-95/23099
- WO-A-97/08244

## Description

The present invention relates to rigid, water-soluble containers, in particular to such containers that may be utilised for the delivery into an aqueous environment of a fabric care, surface care or dishwashing composition.

Clothes washing compositions may be delivered to a clothes washing machine by a delivery tray from which the composition is fed into the washing drum, or they may be placed directly into the washing drum. The washing compositions may be in powder, liquid or block form. Liquid compositions have the disadvantage that they may be spilt. The same applies to powder compositions. Powder compositions have the additional disadvantage that they may produce dust which can be inhaled. These problems are overcome or lessened when blocks of washing composition are used. These are normally individually wrapped. On unwrapping a block, for use, it is still possible that some dust may be produced. Additionally it is an inconvenience for the consumer to have to unwrap the block. Furthermore it is almost impossible for the user to avoid some contact between the block and his or her skin, so leading to a requirement for the user to wash their hands after starting the washing machine. In fact, all of the methods described involve a risk of contact between the composition and the skin, and it is desirable in all cases for the user to wash their hands after starting the washing machine. In this context it should be borne in mind that many compositions contain enzymes to assist the cleaning action. Even though the user may tolerate enzyme residues which may be left in clothes after washing, they may still not tolerate contact between the concentrated washing composition containing the enzymes, and the skin.

Similar considerations apply in relation to other areas including fabric care, surface care and dishwashing. Thus, in relation in particular to dishwashing compositions, there are also problems of spillage, dust generation, skin contact and inconvenience.

It is known to package chemical compositions which may be of a hazardous or irritant nature in water-soluble or water-dispersible materials such as films. The package can simply be added to water in order to dissolve or disperse the contents of the package into the water.

For example, WO 89/12587 discloses a package which comprises an envelope of a water-soluble or water-dispersible material which comprises a flexible wall and a water-soluble or water-dispersible heat seal. The package may contain an organic liquid comprising, for example, a pesticide, fungicide, insecticide or herbicide.

CA-A-1, 112, 534 discloses a packet made of a water-soluble material in film form enclosing within it a paste-form, automatic dishwasher-compatible detergent composition. The water-soluble material may be, for example, poly(vinyl alcohol), polyethylene oxide or methyl cellulose.

It is also known to form water-soluble containers by thermoforming a water-soluble material. For example, WO 92/17382 discloses a package containing an agrochemical such as a pesticide comprising a first sheet of nonplanar water-soluble or water-dispersible material and a second sheet of water-soluble or water-dispersible material superposed on the first sheet and sealed to it by a continuous closed water-soluble or water-dispersible seal along a continuous region of the superposed sheets.

The above methods of packaging have, however, a number of disadvantages.

The first disadvantage is that they do not have a particularly attractive appearance. In fields such as containers used in the domestic environment, an attractive appearance for an article is extremely desirable. Liquids contained in envelopes of water-soluble film can have a limp, unattractive appearance.

The second disadvantage is that it is difficult to form two or more separate compartments in the packaging so that two incompatible components are both enclosed but separated from each other. Although an arrangement has been described to separate incompatible materials in flexible pouches in WO 93/08095, the method proposed is complex and is not currently achievable in large-scale manufacturing. It cannot, therefore, be used for producing large numbers of containers.

The third disadvantage is that there is only limited control of the release profile of the compositions held in the containers. For example, when a composition is held between two planar water-soluble films or in a thermoformed package, the composition is simply released at the time when the films dissolve or disperse in water. While it may be possible to control to a certain extent the timing of the start of release of the contents, there can be no control over the rate of release of the contents since the entire film dissolves or disperses at about the same time. Furthermore it can be difficult to provide an extended time before the contents of the package are released. An additional problem also arises with thermoformed packages. If the thermoforming is not carefully controlled there may be inadvertent thinning of the film material at the points where the material is drawn down into the mould when it is thermoformed. This could release the contents of the package early. Additionally, in all of the above packages, it is not possible to release different compositions at different times or at different rates since, as discussed above, it is not possible to incorporate more than one composition in each water-soluble container.

The fourth disadvantage is that the containers cannot be produced at a particularly fast rate. When the containers are produced by heat-sealing planar films or by thermoforming, the containers have to be immediately filled and sealed. All of these procedures have to be carried out in succession. This means that it is not possible to obtain a quick throughput for mass-market goods such as household products. For example, standard thermoforming machines can only produce around 400 to 800 containers per minute.

The present invention seeks to provide water-soluble containers which overcome some or all of the above disadvantages.

The present invention has a number of different aspects and embodiments as follows:

A rigid, water-soluble container made entirely or in part of an injection moulded water-soluble polymer, which polymer when dissolved in water is active in detergency, in which container is present a fabric care, surface care or dishwashing composition, provided that the polymer is not poly (vinyl alcohol).

By the use of the term "active in detergency" we mean that the polymer can aid the efficiency of the fabric care, surface care or dishwashing composition. Preferably it is excluded from the scope of polymers which are active in detergency poly(vinyl alcohol). Preferably a polymer which is active in detergency is a water softening polymer or a dye transfer inhibitor polymer. Specific polymers which are preferred are polyvinylpyrrolidine, polyacrylic acid or an ester thereof, polymaleic acid or an ester thereof, or a copolymer of any thereof. Also included are interpolymers which comprise a blend of any of the above or in addition any other polymer that is also water-soluble. To be active in detergency the polymer must be present in the wash in sufficient quantities to produce the required effect. For example, in an injection moulded container containing a fabric cleaning composition should contain at least 0.2grams of PVP, ideally at least 0.4grams. The use of poly(acrylic acid) or poly(maleic acid) or an ester of either thereof of a copolymer of any thereof in an injection moulded container containing a fabric cleaning composition should contain at least 2 grams of the polymer to provide adequate water softening. It will be appreciated that not all of the amount of the polymer need be present in the container, a percentage of the polymer may be present inside the container, preferably less than 70%wt, ideally less than 50%wt. For other polymers which are active in detergency it is a simple process to determine the amount of polymer needed.

It will be appreciated that the container may be made in part by any other water-soluble polymer. Therefore, a further feature of the invention is a rigid, water-soluble container made of at least two injection moulded polymers, a "first" water-soluble polymer, preferably selected from poly(vinyl alcohol) ; a cellulose derivative (such as an ether or hydroxypropyl methyl cellulose) ; and poly(glycolide), poly(glycolic acid), poly(lactides), poly (lactic acid) or a copolymer thereof; and a "second" water-soluble polymer which polymer when dissolved in water is active in detergency.

The present invention further provides a method of ware washing, comprising use of a container, as defined above, the method comprising introducing the container into a ware washing machine prior to commencement of the washing process, the container being entirely consumed during the washing process. The ware washing machine may, for example, be a dishwashing or laundry washing machine.

The containers of the present invention overcome some or all of the above disadvantages.

Firstly, because the containers are rigid and self-supporting, they have an attractive, uniform appearance which does not vary between different containers. In addition, a wide variety of different shapes and designs are available. Furthermore, the rigid containers can easily have various elements incorporated which are considered to be pleasing to the eye but which are impossible to incorporate in the flexible containers discussed above.

Secondly, because the containers are rigid, it is easily possible to introduce two or more compartments, or have larger compartments separated by walls, to separate mutually incompatible ingredients. The containers can also hold part of the composition on an external surface, for example in an indentation. Furthermore, the container can be moulded is almost any shape that might be useful. In particular it can be given raised or lowered areas.

Thirdly, it is possible to control the release profile of the contents of the container. Since the container is rigid, it is possible to adapt the width of all of the walls of the container to control both the start of release of the composition as well as the rate of release. For example, one or more walls may be made thin in order to have an early release of the composition. Alternatively all the walls may be thick in order to ensure that there is a delayed release of the composition. The rate of release of the composition may also be controlled by ensuring that only part of the container has thin walls which are dissolved or dispersed before the remainder of the container. Different walls or parts of walls of the container may be prepared from different water-soluble polymers which have different dissolution characteristics. For example, a first compartment may be fully enclosed by a polymer which dissolves at a higher or lower temperature than the polymer enclosing a second compartment. Thus different components can be released at different times. If the container holds a solid or gelled composition, it is not even necessary for the container to fully enclose the composition. A part may be left exposed, so that it immediately begins to dissolve when added to water.

Fourthly, since the containers are rigid and self-supporting, they can easily be filled on a production line using normal filling equipment. Such filling equipment is quite capable of filling at least 1500 containers per minute.

Fifthly the containers as described provide added efficiency to the compositions contained therein by themselves being active in detergency.

Desirably the container, apart from its contents, consists essentially of the injection-moulded polymer or polymers.

It is possible for suitable additives such as plasticizers and lubricants to be included. Plasticizers are generally used in an amount of up to 20 wt%, for example from 15 to 20 wt%, lubricants are generally used in an amount of 0.5 to 5% wt% and the polymer is generally therefore used in an amount of 75 to 84.5 wt%, based on the total amount of the moulding composition.

The container is generally cold water (20°C) soluble, but may be insoluble in cold water at 20°C and only become soluble in warm water or hot water having a temperature of, for example, 30°C, 40°C, 50°C or even 60°C.

For certain applications or uses, containers soluble in aqueous environments at temperatures as low as 5°C are also desirable.

In order to ensure that the polymer is capable of being injection moulded, it is usual to incorporate components such as plasticizers and mould release agents in an amount of up to, for example, 15 wt% of the composition. Suitable plasticizers are, for example, pentaerthyritol such as depentaerythritol, sorbitol, mannitol, glycerine and glycols such as glycerol, ethylene glycol and polyethylene glycol. Solids such as talc, stearic acid, magnesium stearate, silicon dioxide, zinc stearate, and colloidal silica may also be used.

Poly(vinylpyrollidone) may be moulded at temperatures of from 120-180°C, depending upon the formulation selected and the melt flow index required.

Poly(acrylic acid) may be moulded at temperatures of from 180-220°C, for example, depending upon the formulation selected and the melt flow index required.

Poly(maleic acid) may be moulded at temperatures of, from 180-220°C for example, depending upon the formulation selected and the melt flow index required.

The PVOH, when used as a second polymer in the container, may be moulded at temperatures of, for example, from 180-220°C, depending upon the formulation selected and the melt flow index required. A preferred PVOH which is already in a form suitable for injection moulding is sold in the form of granules under the name CP1210T05 by Soltec Development SA of Paris, France. The PVOH preferably used to form the container of the present invention may be partially or fully alcoholised or hydrolysed. For example it may be from 40-100%, preferably 70-92 %, more preferably about 88%, alcoholised or hydrolysed polyvinylacetate.

Preferably the container is a container enclosing a washing composition.

All of the polymer compositions may also include other components such as colouring agents and components which modify their properties.

Injection moulding techniques are well known to the skilled person and are well described in the literature (see, for example a good summary is provided in "The Wiley Encyclopedia of Packaging Technology" Wiley Interscience 1986). Special techniques, described below, are preferred features of the invention for producing containers having more than one type of polymer.

### Simultaneous injection moulding

1) two or more polymers are molten mixed and injected into a mould;
2) two or more polymers are injected into a mould through more than one gate, each gate allowing simultaneous injection of a single polymer or molten mix into the mould;
3) simultaneously injection moulding two or more compartments and then joining the compartments together.

### Sequential injection moulding

1) multi-component injection moulding;
2) sandwich injection moulding;
3) sequentially injection moulding two or more;
4) compartments and then joining the compartments together.

Multi-component injection moulding covers two distinct processes
A) injection moulding a polymer or molten polymer mix into a mould, removing the solid polymer and inserting it into a second mould and injection moulding a second polymer or polymer mix into the second mould;
B) injection moulding a polymer or molten polymer mix into a part of a mould, injection moulding a second polymer or molten polymer mix into a further part of the mould.

Steps A) and B) may be repeated more than once and may be combined. It will be appreciated by the skilled person that the first injection moulded polymer must survive the pressure and temperature conditions of the second, or subsequent, injection moulding.

For step B) the first polymer or molten mix may be prevented from entering parts of the mould by any physical means, such as, gates, gravity, positive or negative pressure.

Sandwich injection moulding (or sometimes called skin-core injection moulding) comprises injection moulding a polymer or molten polymer mix into a mould until it is partially filled and then injecting a second polymer or molten polymer mix into the same mould through the same gate to form the core. An additional step of sealing the core may be performed.

It will be appreciated that any combination of simultaneous and sequential injection moulding may be used.

A further technique that can be used is to coat part or the entire container, the container being moulded from any water-soluble polymer, with a polymer which is active in detergency, provided that the polymer is not poly (vinyl alcohol). Coating may be achieved by dipping the container into a solution of polymer or in molten polymer or by spray coating of a solution of polymer or molten polymer. It will be appreciated that polymers that are active in detergency but which cannot be injection moulded can be used, preferably, PVNO.

In all aspects and embodiments of the present invention, the container generally comprises a water-soluble receptacle part which holds the composition and a water-soluble closure part, which may simply close the receptacle part or may itself have at least some receptacle function. The receptacle part preferably has side walls which terminate at their upper end in an outward flange in which the closure part is sealingly secured, especially if the closure part is in the form of a film. Ideally the closure part is joined to the receptacle part directly by means of a hinge part, preferably the receptacle, closure and hinge part are caste in a single mould. The securement may be by means of an adhesive but is preferably achieved by means of a seal, between the flange and the closure part. Preferably the receptacle part is connected to the closure part via a hinge part thus forming a single article which is easily sealed. Heat sealing may be used or other methods such as infra-red, radio frequency, ultrasonic, laser, solvent, vibration or spin welding. An adhesive such as an aqueous solution of PVOH or a cellulose ether may also be used. The seal is desirably also water-soluble.

The closure part may itself be injection moulded or blow moulded. Preferably, however, it is a plastics film secured over the receptacle part. The film may, for example, comprise PVOH or a cellulose ether such as HPMC or another water-soluble polymer.

The receptacle part may define two or more compartments and at least one compartment is made entirely or in part of a water-soluble polymer which when dissolved in water is active in detergency.

The container walls have thicknesses such that the containers are rigid. For example, the outside walls and any inside walls which have been injection moulded independently have a thickness of greater than 100µm, for example greater than 150µm or greater than 200µm, 300µm, or 500µm, 750µm or 1mm. Preferably, the closure part is of a thinner material than the receptacle part. If different compartments having different dissolution times are required, different wall thicknesses can be used. A thickness difference of from 100µm to 500µm, preferably from 250µm to 350m, would give a suitable difference in release times.

Preferably, the closure part dissolves in water (at least to the extent of allowing the washing composition in the receptacle part to be dissolved by the water; and preferably completely) at 40°C in less than 5 minutes, preferably in less than 2 minutes.

The receptacle part and the closure part could be of the same thickness or different thicknesses. The closure part may, for example, be of higher solubility than the receptacle part, in order to dissolve more quickly.

In an alternative feature of the invention we describe a rigid, water-soluble container made entirely or in part of an injection moulded water-soluble polymer, in which container is present a fabric care, surface care or dishwashing composition and has bound to the inside or outside of the container or encased within the container a second polymer which polymer when dissolved in water is active in detergency.

Preferably, the second polymer is polyvinylpyrrolidine, polyacrylic and or an ester thereof, polymaleic acid or an ester thereof, or a copolymer of any thereof.

The second polymer may be in the form of a shaped article, such as a ball, rod, or as a sheet. When attached to the outside or inside of the container the second polymer can be added to the mould prior to injection moulding.

Preferably, the container is made entirely or in part of poly (vinyl alcohol) in the above preferred feature

Preferably, the washing container is generally cuboid in its external shape, with the top wall being formed by the closure part, and with the side walls and base wall being formed by the receptacle part.

Preferably, a washing container of the invention is manufactured by forming an array of receptacle parts, each receptacle part being joined to adjacent receptacle parts, and being separable from them by a snap or tear action. The array is preferably one which has columns and rows of the receptacle parts. The receptacle parts may be separated by frangible webs of the water-soluble polymer such as PVOH or a cellulose ether.

Alternatively, the receptacle parts may be manufactured with the aforementioned flanges, such that they are separated from each other by a line of weakness. For example the material may be thinner, and so able to be broken or torn readily. The thinness may be a result of the moulding process or, preferably, of a later scoring step.

In the manufacturing method, the array, formed by injection moulding, is fed to a filling zone, and all the receptacle parts are charged with the washing composition. A sheet of a water-soluble polymer such as PVOH or a cellulose ether may then be secured over the top of the array, to form the closure parts for all the receptacle parts of the array. The array may then be split up into the individual washing capsules, prior to packaging, or it may be left as an array, for packaging, to be split by the user. Preferably, it is left as an array, for the user to break or tear off the individual washing capsules. Preferably, the array has a line of symmetry extending between capsules, and the two halves of the array are folded together, about that line of symmetry, so that closure parts are in face-to-face contact. This helps to protect the closure parts from any damage, between factory and user. It will be appreciated that the closure parts are more prone to damage than the receptacle parts. Alternatively two identical arrays of washing capsules may be placed together with their closure parts in face-to-face contact, for packaging.

In some embodiments of the invention the container, capsule or receptacle part may define a single compartment. In other embodiments of the invention the container, capsule or receptacle part may define two or more compartments, which contain different products useful in a washing process. In such a situation a dividing wall or walls of the compartments preferably terminate at the top of the container, i.e. in the same plane as the top edges of the side walls, so that when the receptacle part is closed by the closure part the contents of the compartments cannot mix. The container may be provided with an upstand, preferably spaced from the side walls thereof, and preferably of generally cylindrical shape. If wished, the remaining volume of the container can be divided into two or more parts by means of walls extending between the upstand and the side walls.

The container may be formed with an opening, for example a depression, formed in the side wall or the base wall, and preferably being open in the outward direction. That is to say, it preferably does not form part of the main volume defined by the container. Preferably the opening is adapted to receive, in a press-fit manner, a solid block (for example a tablet) of a composition, for example a material useful in a washing process.

Preferably, the closure part is of a transparent or translucent material, so that the contents of the washing capsule can be seen.

Preferably, the container is of a transparent or translucent material, so that the contents of the washing capsule can be seen.

The washing composition within the container, or within a compartment thereof, need not be uniform. For example during manufacture it could be fed first with a settable agent, for example a gel, useful in a washing process, and then with a different material. The first material could dissolve slowly in the washing process so as to deliver its charge over a long period within the washing process. This might be useful, for example, to provide immediate, delayed or sustained delivery of a softening agent in a clothes washing container.

The container may, for example, be in at least two parts (a body part and a cap part) which fit tightly, and preferably sealingly and inseparably, together to form a compartment in which is stored the ingredient to be achieved. In one example, the container or capsule may have three parts - a body such as a receptacle, a first cap, and then a second cap to fit over the closed end of either the body or the first cap, so as to result in a capsule with two separate compartments. Where there are three such parts (or more; four parts - a body and three caps - make three compartments, and so on), then naturally the ingredients in each compartment may be the same or they may be different.

In all embodiments of the present invention one compartment may contain, for example, a liquid or solid component (such as a powder, granules or a compressed or gelled tablet) and another may contain a different liquid or solid component (such as a powder, granules or a compressed or gelled tablet). Alternatively, more than one component may be present in one or more compartments. For example a compartment may contain a solid component, for example in the form of a ball or pill (such as a powder, granules or a compressed or gelled tablet), and a liquid component.

Desirably the composition has a mass of at least 10 g or 15 g, for example, from 10 g or 15 g to 100 g, especially from 10 g to 15 g to 40 g. For example, a dishwashing composition may weigh from 10 g or 15 g to 20 g, a water-softening composition may weigh from 25 g to 35 g, and a laundry composition may weigh from 10 g to 40 g, 20 g to 40 g or 30 g to 40 g.

In general the maximum dimension of the container is 5 cm. For example, a cuboid container may have a length of 1 to 5 cm, especially 3.5 to 4.5 cm, a width of 1.5 to 3.5 cm, especially 2 to 3 cm, and a height of 1 to 2 cm, especially 1.25 to 1.75 cm.

The composition may comprise a powder, gel, paste or low water liquid foundation.

The composition contained by the container may be, for example, any which is suitable for the designated application, for example a clothes washing or dishwashing application. It may be a powder or a liquid but if a liquid, may be a low water formulation, preferably having a maximum water content of 5 wt%, in order to maintain the integrity of the walls of the capsule or a higher water formulation containing, for example, at least 8 wt% water. It will be appreciated that higher water contents may be present where the water is chemically or physically bound. The composition may be formulated having regard to the fact that the user will not come into contact with the composition, whether by inhalation or by skin contact. For example, the composition may include an enzyme, without concern about physical contact between the composition containing the enzyme, and the user.

If the container contains an aqueous liquid having a relatively high free water content, it may be necessary to take steps to ensure the liquid does not attack the water-soluble polymer if it is soluble in cold water (20°C) , or water at a temperature of up to, say, 35°C. Steps may be taken to treat the inside surfaces of the container, for example by coating it with agents such as PVdC (poly(vinylidene chloride))or PTFE (polytetrafluoroethylene), or to adapt the composition to ensure that it does not dissolve the polymer. For example, it has been found that ensuring the composition has a high ionic strength or contains an agent which minimises water loss through the walls of the container will prevent the composition from dissolving the polymer from the inside. This is described in more detail in EP-A-518,689 and WO 97/27743.

The composition held within the container depends, of course, on the intended use of the composition. It may, for example, contain surface active agents such as an anionic, non-ionic, cationic, amphoteric or zwitterionic surface active agent or mixture thereof.
Examples of anionic surfactants are straight-chained or branched alkyl sulfates and alkyl polyalkoxylated sulfates, also known as alkyl ether sulfates. Such surfactants may be produced by the sulfation of higher C₈-C₂₀ fatty alcohols.
Examples of primary alkyl sulfate surfactants are those of formula:

ROSO₃⁻M⁺

wherein R is a linear C₈-C₂₀ hydrocarbyl group and M is a water-solubilising cation. Preferably R is C₁₀-C₁₆ alkyl, for example C₁₂-C₁₄, and M is alkali metal such as lithium, sodium or potassium.
Examples of secondary alkyl sulfate surfactants are those which have the sulfate moiety on a "backbone" of the molecule, for example those of formula:

CH₃ (CH₂)ₙ(CHOSO₃⁻M⁺) (CH₂) ₘCH₃

wherein m and n are independently 2 or more, the sum of m+n typically being 6 to 20, for example 9 to 15, and M is a water-solubilising cation such as lithium, sodium or potassium.
Especially preferred secondary alkyl sulfates are the (2,3) alkyl sulfate surfactants of formulae:

CH₃(CH₂)ₓ(CHOSO₃⁻M⁺)CH₃

and

CH₃(CH₂)ₓ(CHOSO₃⁻M⁺)CH₂CH₃

for the 2-sulfate and 3-sulfate, respectively. In these formulae x is at least 4, for example 6 to 20, preferably 10 to 16. M is cation, such as an alkali metal, for example lithium, sodium or potassium.
Examples of alkoxylated alkyl sulfates are ethoxylated alkyl sulfates of the formula:

RO(C₂H₄O)ₙSO₃⁻M⁺

wherein R is a C₈-C₂₀ alkyl group, preferably C₁₀-C₁₈ such as a C₁₂-C₁₆, n is at least 1, for example from 1 to 20, preferably 1 to 15, especially 1 to 6, and M is a salt-forming cation such as lithium, sodium, potassium, ammonium, alkylammonium or alkanolammonium. These compounds can provide especially desirable fabric cleaning performance benefits when used in combination with alkyl sulfates.

The alkyl sulfates and alkyl ether sulfates will generally be used in the form of mixtures comprising varying alkyl chain lengths and, if present, varying degrees of alkoxylation.

Other anionic surfactants which may be employed are salts of fatty acids, for example C₈-C₁₈ fatty acids, especially the sodium or potassium salts, and alkyl, for example C₈₋C₁₈, benzene sulfonates.

Examples of nonionic surfactants are fatty acid alkoxylates, such as fatty acid ethoxylates, especially those of formula:

R (C₂H₄O)ₙOH

wherein R is a straight or branched C₈-C₁₆ alkyl group, preferably a C₉-C₁₅, for example C₁₀-C₁₄, alkyl group and n is at least 1, for example from 1 to 16, preferably 2 to 12, more preferably 3 to 10.

The alkoxylated fatty alcohol nonionic surfactant will frequently have a hydrophilic-lipophilic balance (HLB) which ranges from 3 to 17, more preferably from 6 to 15, most preferably from 10 to 15.

Examples of fatty alcohol ethoxylates are those made from alcohols of 12 to 15 carbon atoms and which contain about 7 moles of ethylene oxide. Such materials are commercially marketed under the trademarks Neodol 25-7 and Neodol 23-6.5 by Shell Chemical Company. Other useful Neodols include Neodol 1-5, an ethoxylated fatty alcohol averaging 11 carbon atoms in its alkyl chain with about 5 moles of ethylene oxide; Neodol 23-9, an ethoxylated primary C₁₂-C₁₃ alcohol having about 9 moles of ethylene oxide; and Neodol 91-10, an ethoxylated C₉-C₁₁ primary alcohol having about 10 moles of ethylene oxide.

Alcohol ethoxylates of this type have also been marketed by Shell Chemical Company under the Dobanol trademark. Dobanol 91-5 is an ethoxylated C₉-C₁₁ fatty alcohol with an average of 5 moles ethylene oxide and Dobanol 25-7 is an ethoxylated C₁₂-C₁₅ fatty alcohol with an average of 7 moles of ethylene oxide per mole of fatty alcohol.

Other examples of suitable ethoxylated alcohol nonionic surfactants include Tergitol 15-S-7 and Tergitol 15-S-9, both of which are linear secondary alcohol ethoxylates available from Union Carbide Corporation. Tergitol 15-S-7 is a mixed ethoxylated product of a C₁₁-C₁₅ linear secondary alkanol with 7 moles of ethylene oxide and Tergitol 15-S-9 is the same but with 9 moles of ethylene oxide.

Other suitable alcohol ethoxylated nonionic surfactants are Neodol 45-11, which is a similar ethylene oxide condensation products of a fatty alcohol having 14-15 carbon atoms and the number of ethylene oxide groups per mole being about 11. Such products are also available from Shell Chemical Company.

Further nonionic surfactants are, for example, C₁₀-C₁₈ alkyl polyglycosides, such s C₁₂-C₁₆ alkyl polyglycosides, especially the polyglucosides. These are especially useful when high foaming compositions are desired. Further surfactants are polyhydroxy fatty acid amides, such as C₁₀-C₁₈ N-(3-methoxypropyl) glycamides and ethylene oxide-propylene oxide block polymers of the Pluronic type.

Examples of cationic surfactants are those of the quaternary ammonium type.

The total content of surfactants in the composition is desirably 60 to 95 wt%, especially 75 to 90 wt%. Desirably an anionic surfactant is present in an amount of 50 to 75 wt%, the nonionic surfactant is present in an amount of 5 to 50 wt%, and/or the cationic surfactant is present in an amount of from 0 to 20 wt%. The amounts are based on the total solids content of the composition, i.e. excluding any solvent which may be present.

The compositions, particularly when used as laundry washing or dishwashing compositions, may also independently comprise enzymes, such as protease, lipase, amylase, cellulase and peroxidase enzymes. Such enzymes are commercially available and sold, for example, under the registered trade marks Esperase, Alcalase and Savinase by Nova Industries A/S and Maxatase by International Biosynthetics, Inc. Desirably the enzymes are independently present in the compositions in an amount of from 0.5 to 3 wt%, especially 1 to 2 wt%, when added as commercial preparations they are not pure and this represents an equivalent amount of 0.005 to 0.5 wt% of pure enzyme.

The compositions may, if desired, independently comprise a thickening agent or gelling agent. Suitable thickeners are polyacrylate polymers such as those sold under the trade mark CARBOPOL, or the trade mark ACUSOL by Rohm and Haas Company. Other suitable thickeners are xanthan gums. The thickener, if present, is generally present in an amount of from 0.2 to 4 wt%, especially 0.5 to 2 wt%.

Compositions used in dishwashing independently usually comprise a detergency builder. The builders counteract the effects of calcium, or other ion, water hardness. Examples of such materials are citrate, succinate, malonate, carboxymethyl succinate, carboxylate, polycarboxylate and polyacetyl carboxylate salts, for example with alkali metal or alkaline earth metal cations, or the corresponding free acids. Specific examples are sodium, potassium and lithium salts of oxydisuccinic acid, mellitic acid, benzene polycarboxylic acids, C₁₀-C₂₂ fatty acids and citric acid. Other examples are organic phosphonate type sequestering agents such as those sold by Monsanto under the trade mark Dequest and alkylhydroxy phosphonates. Citrate salts and C₁₂-C₁₈ fatty acid soaps are preferred. Further builders are; phosphates such as sodium, potassium or ammoniutri salts of mono-, di- or tri-poly or oligo-phosphates; zeolites; silicates, amorphous or structured, such as sodium, potassium or ammonium salts.

Other suitable builders are polymers and copolymers known to have builder properties. For example, such materials include appropriate polyacrylic acid, polymaleic acid, and polyacrylic/polymaleic and copolymers and their salts, such as those sold by BASF under the trade mark Sokalan.
The builder is desirably present in an amount of up to 90 wt%, preferably 15 to 90 wt%, more preferable 15 to 75 wt%, relative to the total weight of the composition. Further details of suitable components are given in, for example, EP-A-694,059, EP-A-518,720 and WO 99/06522.

The compositions can also optionally comprise one or more additional ingredients. These include conventional detergent composition components such as further surfactants, bleaches, bleach enhancing agents, builders, suds boosters or suds suppressors, anti-tarnish and anticorrosion agents, organic solvents, co-solvents, phase stabilisers, emulsifying agents, preservatives, soil suspending agents, soil release agents, germicides, pH adjusting agents or buffers, non-builder alkalinity sources, chelating agents, clays such as smectite clays, enzyme stabilizers, anti-limescale agents, colourants, dyes, hydrotropes, dye transfer inhibiting agents, brighteners, and perfumes. If used, such optional ingredients will generally constitute no more than 10 wt%, for example from 1 to 6 wt%, the total weight of the compositions.

Compositions which comprise an enzyme may optionally contain materials which maintain the stability of the enzyme. Such enzyme stabilizers include, for example, polyols such as propylene glycol, boric acid and borax. Combinations of these enzyme stabilizers may also be employed. If utilized, the enzyme stabilizers generally constitute from 0.1 to 1 wt% of the compositions.

The compositions may optionally comprise materials which serve as phase stabilizers and/or co-solvents. Examples are C₁-C₃ alcohols such as methanol, ethanol and propanol. C₁-C₃ alkanolamines such as mono-, di- and triethanolamines can also be used, by themselves or in combination with the alcohols. The phase stabilizers and/or co-solvents can, for example, constitute 0 to 1 wt%, preferably 0.1 to 0.5 wt%, of the composition.

The compositions may optionally comprise components which adjust or maintain the pH of the compositions at optimum levels. The pH may be from, for example, 1 to 13, such as 8 to 11 depending on the nature of the composition. For example a dishwashing composition desirably has a pH of 8 to 11, a laundry composition desirable has a pH of 7 to 9, and a water-softening composition desirably has a pH of 7 to 9. Examples of pH adjusting agents are NaOH and citric acid.

The above examples may be used for dish or fabric washing. In particular dish washing formulations are preferred which are adapted to be used in automatic dish washing machines. Due to their specific requirements specialised formulation is required and these are illustrated below

Amounts of the ingredients can vary within wide ranges, however preferred automatic dishwashing detergent compositions herein (which typically have a 1% aqueous solution pH of above 8, more preferably from 9.5 to 12, most preferably from 9.5 to 10.5) are those wherein there is present: from 5% to 90%, preferably from 5% to 75%, of builder; from 0.1% to 40%, preferably from 0.5% to 30%, of bleaching agent; from 0.1% to 15%, preferably from 0.2% to 10%, of the surfactant system; from 0.0001% to 1%, preferably from 0.001% to 0.05%, of a metal-containing bleach catalyst; and from 0.1% to 40%, preferably from 0.1% to 20% of a water-soluble silicate. Such fully-formulated embodiments typically further comprise from 0.1% to 15% of a polymeric dispersant, from 0.01% to 10% of a chelant, and from 0.00001% to 10% of a detersive enzyme, though further additional or adjunct ingredients may be present. Detergent compositions herein in granular form typically limit water content, for example to less than 7% free water, for better storage stability.

Non-ionic surfactants useful in ADW (Automatic Dish Washing) compositions of the present invention desirably include surfactant(s) at levels of from 2% to 60% of the composition. In general, bleach-stable surfactants are preferred. Non-ionic surfactants generally are well known, being described in more detail in Kirk Othmer's Encyclopedia of Chemical Technology, 3rd Ed., Vol. 22, pp. 360-379, "Surfactants and Detersive Systems", incorporated by reference herein.

Preferably the ADW composition comprises at least one non-ionic surfactant. One class of non-ionics are ethoxylated non-ionic surfactants prepared by the reaction of a monohydroxy alkanol or alkylphenol with 6 to 20 carbon atoms with preferably at least 12 moles particularly preferred at least 16 moles, and still more preferred at least 20 moles of ethylene oxide per mole of alcohol or alkylphenol.

Particularly preferred non-ionic surfactants are the non-ionic from a linear chain fatty alcohol with 16-20 carbon atoms and at least 12 moles particularly preferred at least 16 and still more preferred at least 20 moles of ethylene oxide per mole of alcohol.

According to one preferred embodiment the non-ionic surfactant additionally comprise propylene oxide units in the molecule. Preferably this PO units constitute up to 25% by weight, preferably up to 20% by weight and still more preferably up to 15% by weight of the overall molecular weight of the non-ionic surfactant. Particularly preferred surfactants are ethoxylated monohydroxy alkanols or alkylphenols, which additionally comprises polyoxyethylene-polyoxypropylene block copolymer units. The alcohol or alkylphenol portion of such surfactants constitutes more than 30%, preferably more than 50%, more preferably more than 70% by weight of the overall molecular weight of the non-ionic surfactant. Another class of non-ionic surfactants includes reverse block copolymers of polyoxyethylene and polyoxypropylene and block copolymers of polyoxyethylene and polyoxypropylene initiated with trimethylolpropane.

Another preferred non-ionic surfactant can be described by the formula:

R¹O[CH₂CH(CH₃)O]ₓ[CH₂CH₂O]_{y}[CH₂CH(OH)R²]

wherein R¹ represents a linear or branched chain aliphatic hydrocarbon group with 4-18 carbon atoms or mixtures thereof, R² represents a linear or branched chain aliphatic hydrocarbon rest with 2-26 carbon atoms or mixtures thereof, *x* is a value between 0.5 and 1.5 and *y* is a value of at least 15.

Another group of preferred nonionic surfactants are the end-capped polyoxyalkylated non-ionics of formula:

R¹O[CH₂CH(R³)O]ₓ[CH₂]ₖCH(OH)[CH₂]ⱼOR²

wherein R¹ and R² represent linear or branched chain, saturated or unsaturated, aliphatic or aromatic hydrocarbon groups with 1-30 carbon atoms, R³ represents a hydrogen atom or a methyl, ethyl, n-propyl, iso-propyl, n-butyl, 2-butyl or 2-methyl-2-butyl group , x is a value between 1 and 30 and, k and j are values between 1 and 12, preferably between 1 and 5. When the value of x is ≥2 each R³ in the formula above can be different. R¹ and R² are preferably linear or branched chain, saturated or unsaturated, aliphatic or aromatic hydrocarbon groups with 6-22 carbon atoms, where group with 8 to 18 carbon atoms are particularly preferred. For the group R³ H, methyl or ethyl are particularly preferred. Particularly preferred values for x are comprised between 1 and 20, preferably between 6 and 15.

As described above, in case x≥2, each R³ in the formula can be different. For instance, when x=3, the group R³ could be chosen to build ethylene oxide (R³=H) or propylene oxide (R³=methyl) units which can be used in every single order for instance (PO)(EO)(EO), (EO) (PO) (EO), (EO) (EO) (PO) , (EO) (EO) (EO), (PO) (EO) (PO), (PO) (PO) (EO) and (PO) (PO) (PO). The value 3 for x is only an example and bigger values can be chosen whereby a higher number of variations of (EO) or (PO) units would arise.

Particularly preferred end-capped polyoxyalkylated alcohols of the above formula are those where k=1 and j=1 originating molecules of simplified formula:

R¹O[CH₂CH(R³)O]ₓCH₂CH(OH)CH₂OR²

The use of mixtures of different non-ionic surfactants is particularly preferred in ADW formulations for example mixtures of alkoxylated alcohols and hydroxy group containing alkoxylated alcohols.

The composition, such as a washing composition within the container, capsule or receptacle part, or within a compartment thereof if there is more than one compartment, need not be uniform. For example during manufacture it could be fed first with a settable agent, for example a gel, useful in a washing process, and then with a different material. The first material could dissolve slowly in the washing process so as to deliver its charge over a long period within the washing process. This might be useful, for example, to provide delayed or sustained delivery of a softening agent in a clothes washing capsule.

The composition, such as a washing composition may, especially for dishwashing or laundry, include a tablet. Preferably a tablet contains a material useful in a washing process and is formulated to provide slow release of that material during a washing process and/or delayed release thereof. Delayed release may be achieved by providing the tablet with a coating which is slow to dissolve during the washing process. Alternatively the tablet may provide a quick release of components required early in the wash, for example water-softening components and/or enzymes. The tablet may, for example, comprise a disrupting agent, such as one which effervesces when in contact with water such as a combination of citric acid and an alkali metal carbonate or bicarbonate.

A tablet may be provided in the main volume of the receptacle part or may be provided in an outwardly facing opening or depression, as previously described.

When a washing capsule of the invention has a tablet retained in an outwardly facing opening or depression the tablet is preferably one which will not transfer any washing composition to the hands of a user. For example, it may be coated with a soluble polymeric material. As mentioned above, this may also be desirable for delayed release of its charge. If it is desired that the tablet dissolves quickly it may, for example, comprise a disrupting agent such as an effervescing agent.

## Claims

1. A rigid, water-soluble container made entirely or in part of an injection moulded water-soluble polymer, which polymer when dissolved in water is active in detergency, in which container is present a fabric care, surface care or dishwashing composition, provided that the polymer is not poly (vinyl alcohol).

2. A rigid, water-soluble container as claimed in claim 1 made entirely or in part of an injection moulded water-soluble polymer which polymer when dissolved in water is active as a water softener or as a dye transfer inhibitor.

3. A rigid, water-soluble container, as claimed in claim 2, made entirely or in part of an injection moulded water-soluble polymer which polymer is poly(vinylpyrrolidone), poly(acrylic acid) or an ester thereof or poly(maleic acid) or an ester thereof, or a copolymer of any thereof.

4. A rigid, water-soluble container made of at least two water-soluble injection moulded polymers, a first polymer selected from poly(vinyl alcohol), a cellulose derivative, and poly(glycolide), poly(glycolic acid), poly(lactide), poly(lactic acid) or a copolymer of any thereof; and a second water-soluble polymer which polymer when dissolved in water is active in detergency.

5. A rigid, water-soluble container according to claim 4 wherein the first and additional polymer(s) are simultaneously or sequentially injection moulded.

6. A rigid, water-soluble container according to any one of the preceding claims which has two or more compartments.

7. A rigid, water-soluble container according to any one of the preceding claims which comprises a polymer selected from at least one of the following;
poly(vinylpyrrolidone), poly(acrylic acid) or an ester thereof or poly(maleic acid) or an ester thereof,or a copolymer of any thereof.

8. A rigid, water-soluble container according to any one of the preceding claims wherein the container is made from a water-soluble receptacle part and is sealed by a water-soluble closure part, preferably in the form of a film or injection-moulded, rigid closure.

9. A rigid, water-soluble container according to claim 8 wherein the closure part comprises a poly(vinyl alcohol) film or closure.

10. A rigid, water-soluble container according to claim 8 or claim 9 wherein the receptacle part has side walls which terminate at their upper end in an outward flange, to which the closure part is sealingly secured.

11. A rigid, water-soluble container according to claim 8 wherein the closure part is a plastics film.

12. A rigid, water-soluble container according to any one of the preceding claims wherein the composition comprises a powder, gel, paste or low water liquid formulation.

13. A rigid, water-soluble container according to any one of claims 10 to 12 wherein the container comprises a tablet formulated for delayed and/or sustained release of a material.

14. A rigid, water-soluble container according to claim 8 wherein the receptacle part defines two or more compartments and at least one compartment is made entirely or in part of a water-soluble polymer which when dissolved in water is active in detergency.

15. A rigid, water-soluble container according to claim 14 wherein the receptacle part comprises an upstanding wall which separates compartments thereof.

16. A rigid, water-soluble container according to claim 14 wherein the polymer active in detergency is selected from selected from at least one of the following;
poly(vinylpyrrolidone), poly(acrylic acid) or an ester thereof or poly(maleic acid) or an ester thereof,or a copolymer of any thereof.

17. A rigid, water-soluble container according to claim 6 wherein a first compartment is made entirely or in part of a polymer which when dissolved in water is active in detergency.

18. A rigid, water-soluble container according to claim 14 wherein at least one compartment is made at least partly of a second polymer which is poly(vinyl alcohol), a cellulose derivative, preferably an ether or hydroxypropyl methyl cellulose, poly(glycolide), poly(glycolic acid), poly(lactide), poly(lactic acid) or a copolymer of any thereof.

19. A rigid, water-soluble container according to claim 18 wherein the second polymer is poly(vinyl alcohol).

20. A rigid, water-soluble container according to claim 18 or 19 wherein a first compartment dissolves in water at a different rate than a second compartment.

21. A rigid, water-soluble container according to any one of claims 8 to 11 wherein the receptacle part comprises an outwardly facing opening into which a tablet is press-fitted.

22. A rigid, water-soluble container according to any one of claims 8 to 30 wherein the closure part is a transparent or translucent material.

23. A rigid, water-soluble container according to any one of claims 1 to 22 made entirely or in part of polyvinylpyrolidine.

24. An array of rigid, water-soluble washing containers as defined in any one of claims 1 to 23 which are joined together but are readily separable from each other for use.

25. An array according to claim 24 wherein the array has a line of symmetry extending between capsules, and the two halves of the array are folded together about the line of symmetry, with the closure parts in face-to-face contact.

26. A process for the manufacture of an array as defined in claim 24 or 25, which method comprises: forming an array of receptacle parts, each receptacle part being connected to adjacent receptacle parts, but being separable from them by a snap or tear action; charging the receptacle parts with washing composition; and sealingly securing a sheet of a water-soluble polymer over the top of the array, to form the closure parts for all the receptacle parts of the array.

27. A process for the manufacture of a container as claimed in any claim from 1 to 23, which comprises melting the polymer(s), injecting the molten polymer(s) into a mould, removing the rigid water soluble container from the mould and adding the fabric care, surface care, or dishwashing composition into the container.

28. A process according to claim 27 wherein a first polymer and an additional polymer(s) are simultaneously or sequentially injected into the mould.

29. A process according to claim 28 wherein the first polymer and the additional polymer(s) are sequentially injected into the mould, in any order, by one of the following techniques, multi-component injection moulding or sandwich injection moulding.

30. A process according to claim 29 wherein the first polymer and the additional polymer(s) are sequentially injected into the mould, in any order, injection moulding a polymer or molten polymer mix into a mould, removing the solid polymer and inserting into a second mould and injection moulding a second polymer or polymer mix into the second mould.

31. A process according to claim 29 wherein the first polymer and the additional polymer(s) are sequentially injected into the mould, in any order, injection moulding a polymer or molten polymer mix into a part of a mould, injection moulding a second polymer or molten polymer mix into a further part of the mould.

32. A process according to claim 29 wherein the first polymer and the additional polymer(s) are simultaneously injection moulded into the mould as a molten mix.

33. A process according to any one of claims 27 to 32 comprising the additional step of sealing the container.

34. A rigid, water-soluble container made entirely or in part of an injection moulded water-soluble polymer, in which container is present a fabric care, surface care or dishwashing composition and has bound to the inside or outside of the container or encased within the container a second water-soluble polymer which polymer when dissolved in water is active in detergency.

35. A rigid, water-soluble container as claimed in claim 34 wherein the second polymer is polyvinylpyrolidine, polyacrylic acid or an ester thereof, polymaleic acid or an ester thereof, or a copolymer of any thereof.

36. A rigid, water-soluble container as claimed in claim 34 or 35 wherein the second polymer is in the form of a shaped article.

37. A rigid, water-soluble container as claimed in any claim from 34 to 36 wherein the container is made entirely or in part of poly (vinyl alcohol).

## Patentansprüche

1. Starrer, wasserlöslicher Behälter, der vollständig oder teilweise aus einem spritzgegossenen, wasserlöslichen Polymer hergestellt ist, wobei das Polymer beim Lösen in Wasser reinigungsaktiv ist, wobei im Behälter eine Gewebepflege-, Oberflächenpflege- oder Geschirrspülzusammensetzung vorliegt, mit der Maßgabe, dass das Polymer kein Poly(vinylalkohol) ist.

2. Starrer, wasserlöslicher Behälter nach Anspruch 1, der vollständig oder teilweise aus einem spritzgegossenen, wasserlöslichen Polymer hergestellt ist, wobei das Polymer beim Lösen in Wasser als Wasserenthärter oder als Farbstoffübettragungshemmstoff aktiv ist.

3. Starrer, wasserlöslicher Behälter nach Anspruch 2, der vollständig oder teilweise aus einem spritzgegossenen, wasserlöslichen Polymer hergestellt ist, wobei das Polymer Poly(vinylpyrrolidon), Poly(acrylsäure) oder ein Ester davon oder Poly(maleinsäure) oder ein Ester davon oder ein Copolymer von einem davon ist.

4. Starrer, wasserlöslicher Behälter, der aus mindestens zwei wasserlöslichen spritzgegossenen Polymeren, einem ersten Polymer, ausgewählt ist aus Poly(vinylalkohol), einem Cellulosederivat und Poly(glycolid), Poly(glycolsäure), Poly(lactid), Poly(milchsäure) oder einem Copolymer von einem beliebigen davon, und einem zweiten wasserlöslichen Polymer, hergestellt ist, wobei das Polymer beim Lösen in Wasser reinigungsaktiv ist.

5. Starrer, wasserlöslicher Behälter nach Anspruch 4, wobei das erste Polymer und das (die) zusätzlichen Polymer(e) gleichzeitig oder nacheinander spritzgegossen werden.

6. Starrer, wasserlöslicher Behälter nach einem der vorangehenden Ansprüche, der zwei oder mehrere Abteilungen aufweist.

7. Starrer, wasserlöslicher Behälter nach einem der vorangehenden Ansprüche, der ein Polymer, ausgewählt aus mindestens einem von Folgendem umfasst: Poly(vinylpyrrolidon), Poly(acrylsäure) oder einen Ester davon oder Poly(maleinsäure) oder einen Ester davon oder ein Copolymer von einem beliebigen davon.

8. Starrer, wasserlöslicher Behälter nach einem der vorangehenden Ansprüche, wobei der Behälter aus einem wasserlöslichen Aufnahmeteil hergestellt und mit einem wasserlöslichen Verschlussteil vorzugsweise in Form einer Folie oder eines spritzgegossenen, starren Verschlusses versiegelt ist.

9. Starrer, wasserlöslicher Behälter nach Anspruch 8, wobei das Verschlussteil eine Poly(vinylalkohol)-Folie oder einen Poly(vinylalkohol)-Verschluss umfasst.

10. Anspruch 8 oder 8, wobei das Aufnahmeteil Seitenwände aufweist, die an ihrem oberen Ende in einem Auswärtsflansch enden, an welchem das Verschlussteil abdichtend befestigt ist.

11. Starrer, wasserlöslicher Behälter nach Anspruch 8, wobei das Verschlussteil eine Kunststofffolie ist.

12. Starrer, wasserlöslicher Behälter nach einem der vorangehenden Ansprüche, wobei die Zusammensetzung ein Pulver, ein Gel oder eine Paste oder eine Formulierung mit geringem Wassergehalt umfasst.

13. Starrer, wasserlöslicher Behälter nach einem der Ansprüche 10 bis 12, wobei der Behälter eine Tablette umfasst, die zur verzögerten und/oder anhaltenden Freisetzung eines Materials formuliert ist.

14. Starrer, wasserlöslicher Behälter nach Anspruch 8, wobei das Aufnahmeteil zwei oder mehrere Abteilungen definiert und mindestens eine Abteilung vollständig oder teilweise aus einem wasserlöslichen Polymer hergestellt ist, das beim Lösen in Wasser reinigungsaktiv ist.

15. Starrer, wasserlöslicher Behälter nach Anspruch 14, wobei das Aufnahmeteil eine aufrechte Wand aufweist, die die Abteilungen davon voneinander trennt.

16. Starrer, wasserlöslicher Behälter nach Anspruch 14, wobei das reinigungsaktive Polymer ausgewählt ist aus mindestens einem von Folgendem: Poly(vinylpyrrolidon), Poly(acrylsäure) oder einen Ester davon oder Poly(maleirsäure) oder einen Ester davon oder ein Copolymer von einem beliebigen davon.

17. Starrer, wasserlöslicher Behälter nach Anspruch 6, wobei eine erste Abteilung vollständig oder teilweise aus einem Polymer hergestellt ist, das beim Lösen in Wasser reinigungsaktiv ist.

18. Starrer, wasserlöslicher Behälter nach Anspruch 14, wobei mindestens eine Abteilung zumindest teilweise aus Poly(vinylalkohol), einem Cellulosederivat, vorzugsweise einer Ether- oder Hydroxypropylmethylcellulose, und Poly(glycolid), Poly(glycolsäure), Poly(lactid), Poly(milchsäure) oder einem Copolymer von einem beliebigen davon hergestellt ist.

19. Starrer, wasserlöslicher Behälter nach Anspruch 18, wobei das zweite Polymer Poly(vinylalkohol) ist.

20. Starrer, wasserlöslicher Behälter nach Anspruch 18 oder 19, wobei sich eine erste Abteilung mit einer anderen Geschwindigkeit in Wasser löst, als eine zweite Abteilung.

21. Starrer, wasserlöslicher Behälter nach einem der Ansprüche 8 bis 11, wobei das Aufnahmeteil eine nach auswärts gerichtete Öffnung umfasst, in welche eine Tablette eingepresst ist.

22. Starrer, wasserlöslicher Behälter nach einem der Ansprüche 8 bis 30, wobei das Verschlussteil ein durchsichtiges oder lichtdurchlässiges Material ist.

23. Starrer, wasserlöslicher Behälter nach einem der Ansprüche 1 bis 22, der vollständig oder teilweise aus Polyvinylpyrrolidin hergestellt ist.

24. Anordnung aus starren, wasserlöslichen Waschbehältem wie in einem der Ansprüch.e 1 bis 23 definiert, die miteinander verbunden, jedoch zur Verwendung voneinander leicht trennbar sind.

25. Anordnung nach Anspruch 24, wobei die Anordnung eine sich zwischen den Kapseln erstreckende Symmetrielinie aufweist und die beiden Hälften der Anordnung um die Symmetrielinie gefaltet ist, wobei sich die Verschlussteile in einander zugewandtem Kontakt befinden.

26. Verfahren zur Herstellung einer wie in Anspruch 24 oder 25 definierten Anordnung, wobei das Verfahren Folgendes umfasst: Formen einer Anordnung von Aufnahmeteilen, wobei jedes Aufnahmeteil mit benachbarten Aufnahmeteilen verbunden, jedoch durch eine Knick- oder Reißhandlung von ihnen trennbar ist; Füllen der Aufnahmeteile mit Waschzusammensetzung; und abdichtendea Befestigen einer Lage aus einem wasserlöslichen Polymer auf dem oberen Teil der Anordnung, um die Verschlussteile für die gesamten Aufnahmeteile der Anordnung zu bilden.

27. Verfahren zur Herstellung eines wie in einem der Ansprüche 1 bis 23 beanspruchter.' Behälters, das das Schmelzen des Polymers bzw. der Polymere, Spritzen des geschmolzenen Polymers bzw. der geschmolzenen Polymere in eine Gussform, Entfernen des starren, wasserlöslichen Behälters aus der Gussform und Einfüllen der Gewebepflege-, Oberflächenpflege- oder Geschirrspülzusammensetzung in den Behälter umfasst.

28. Verfahren nach Anspruch 27, wobei ein erstes Polymer und (ein) zusätzliche(s) Polymer(e) gleichzeitig oder nacheinander in die Gussform gespritzt werden.

29. Verfahren nach Anspruch 28, wobei das erste Polymer und das (die) zusätzliche(n) Polymer(e) nacheinander in beliebiger Reihenfolge durch eine der folgenden Teehnilcen: Multilcomponentenspritzguss oder Sandwichspritzguss, in die Gussform gespritzt werden.

30. Verfahren nach Anspruch 29, wobei das erste Polymer und das (die) zusätzliche(n) Polymer(e) nacheinander in beliebiger Reihenfolge in die Gussform gespritzt werden, indem ein Polymer oder geschmolzenes Polymergemisch in eine Gussform spritzgegossen wird, das feste Polymer entfernt und in eine zweite Gussform eingesetzt wird und ein zweites Polymer oder Polymergemisch in die zweite Gussform spritzgegossen wird.

31. Verfahren nach Anspruch 29, wobei das erste Polymer und das (die) zusätzliche(n) Polymer(e) nacheinander in beliebiger Reihenfolge in die Gussform gespritzt werden, indem ein Polymer oder geschmolzenes Polymergemisch in einen Teil einer Gussform spritzgegossen wird, ein zweites Polymer oder geschmolze:nes Polymergemisch in einen weiteren Teil der Gussform spritzgegossen wird.

32. Verfahren nach Anspruch 29, wobei das erste Polymer und das (die) zusätzliche(n) Polymer(e) gleichzeitig als geschmolzenes Gemisch in die Gussform spritzgegossen werden,

33. Verfahren nach einem der Ansprüche 27 bis 32, umfassend den zusätzlichen Schritt des Versiegelns des Behälters.

34. Starrer, wasserlöslicher Behälter, der vollständig oder teilweise aus einem spritzgegossenen, wasserlöslichen Polymer hergestellt ist, wobei im Behälter eine Gewebepflege-, Oberflächenpflege- oder Geschirrspülzusammensetzung vorliegt, und der ein zweites wasserlösliches Polymer aufweist, das an die Innenseite oder Außenseite des Behälters gebunden oder im Behälter eingeschlossen ist und beim Lösen in Wasser reinigungsaktiv ist.

35. Starrer, wasserlöslicher Behälter nach Anspruch 34, wobei das zweite Polymer Polyvinylpyrrolidin, Polyacrylasäure oder ein Ester davon, Polymaleinsäure oder ein Ester davon oder ein Copolymer von einem beliebigen davon ist.

36. Starrer, wasserlöslicher Behälter nach einem der Ansprüche 34 oder 35, wobei das zweite Polymer in Form eines Formkörpers vorliegt.

37. Starrer, wasserlöslicher Behälter nach einem der Ansprüche 34 bis 36, wobei der Behälter vollständig oder teilweise aus Poly(vinylalkohol) hergestellt ist.

## Revendications

1. Récipient rigide hydrosoluble constitué intégralement ou en partie d'un polymère hydrosoluble moulé par injection, polymère qui, à l'état dissous dans l'eau, est actif du point de vue détergeant, récipient dans lequel est présente une composition pour l'entretien des étoffes, une composition pour l'entretien de surfaces ou une composition pour le lavage de la vaisselle, sous réserve que le polymère ne soit le poly(alcool vinylique).

2. Récipient rigide hydrosoluble suivant la revendication 1, constitué intégralement ou en partie d'un polymère hydrosoluble moulé par injection, polymère qui, à l'état dissous dans l'eau, est actif comme agent d'adoucissement de l'eau ou comme inhibiteur de transfert de colorant.

3. Récipient rigide hydrosoluble suivant la revendication 2, constitué intégralement ou en partie d'un polymère hydrosoluble moulé par injection, polymère qui est la poly(vinylpyrrolidone), le poly(acide acrylique) ou un de ses esters ou le poly(acide maléique) ou un de ses esters, ou un copolymère de n'importe lequel de ceux-ci.

4. Récipient rigide hydrosoluble constitué d'au moins deux polymères hydrosolubles moulés par injection, un premier polymère étant choisi entre le poly(alcool vinylique), un dérivé de cellulose et un poly(glycolide), le poly(acide glycolique), le poly(lactide), le poly(acide lactique) ou un copolymère de n'importe lequel de ceux-ci ; et un second polymère hydrosoluble ; polymère qui, à l'état dissous dans l'eau, est actif du point de vue détergeant.

5. Récipient rigide hydrosoluble suivant la revendication 4, dans lequel le premier polymère et le ou les polymères supplémentaires sont moulés par injection simultanément ou séquentiellement.

6. Récipient rigide hydrosoluble suivant l'une quelconque des revendications précédentes, qui possède deux ou plus de deux compartiments.

7. Récipient rigide hydrosoluble suivant l'une quelconque des revendications précédentes, qui comprend un polymère choisi dans au moins un type des suivants :
la poly(vinylpyrrolidone), le poly(acide acrylique) ou un de ses esters ou le poly(acide maléique) ou un de ses esters, ou un copolymère de n'importe lequel de ceux-ci.

8. Récipient rigide hydrosoluble suivant l'une quelconque des revendications précédentes, le récipient étant constitué de la partie servant de réceptacle hydrosoluble et étant obturé hermétiquement par une partie de fermeture hydrosoluble, de préférence sous forme d'un film ou d'un moyen de fermeture rigide moulé par injection.

9. Récipient rigide hydrosoluble suivant la revendication 8, dans lequel la partie de fermeture comprend un film ou système de fermeture constitué de poly(alcool vinylique).

10. Récipient rigide hydrosoluble suivant la revendication 8 ou la revendication 9, dans lequel la partie servant de réceptacle a des parois latérales qui se terminent à leur extrémité supérieure par une bride dirigée vers l'extérieur, à laquelle la partie de fermeture est fixée de manière étanche.

11. Récipient rigide hydrosoluble suivant la revendication 8, dans lequel la partie de fermeture est un film de matière plastique.

12. Récipient rigide hydrosoluble suivant l'une quelconque des revendications précédentes, dans lequel la composition comprend une poudre, un gel, une pâte ou une formulation liquide à basse teneur en eau.

13. Récipient rigide hydrosoluble suivant l'une quelconque des revendications 10 à 12, le récipient comprenant une tablette formulée pour la libération retardée et/ou prolongée d'une substance.

14. Récipient rigide hydrosoluble suivant la revendication 8, dans lequel la partie servant de réceptacle définit deux ou plus de deux compartiments et au moins un compartiment est constitué intégralement ou en partie d'un polymère hydrosoluble qui, à l'état dissous dans l'eau, est actif du point de vue détergeant.

15. Récipient rigide hydrosoluble suivant la revendication 14, dans lequel la partie servant de réceptacle comprend une paroi droite qui sépare ses compartiments.

16. Récipient rigide hydrosoluble suivant la revendication 14, dans lequel le polymère actif du point de vue détergeant est choisi parmi au moins un des types suivants :
la poly(vinylpyrrolidone), le poly(acide acrylique) ou un de ses esters ou le poly (acide maléique) ou un de ses esters, ou un copolymère de n'importe lequel de ceux-ci.

17. Récipient rigide hydrosoluble suivant la revendication 6, dans lequel un premier compartiment est constitué intégralement ou en partie d'un polymère qui, à l'état dissous dans l'eau, est actif du point de vue détergeant.

18. Récipient rigide hydrosoluble suivant la revendication 14, dans lequel au moins un compartiment est constitué au moins partiellement d'un second polymère qui est le poly(alcool vinylique), un dérivé de cellulose, de préférence un éther de cellulose ou l'hydroxypropylméthylcellulose, un poly(glycolide), le poly(acide glycolique), le poly(lactide), le poly(acide lactique) ou un copolymère de n'importe lequel de ceux-ci.

19. Récipient rigide hydrosoluble suivant la revendication 18, dans lequel le second polymère est le poly(alcool vinylique).

20. Récipient rigide hydrosoluble suivant la revendication 18 ou 19, dans lequel un premier compartiment se dissout dans l'eau à une vitesse différente de celle d'un second compartiment.

21. Récipient rigide hydrosoluble suivant l'une quelconque des revendications 8 à 11, dans lequel la partie servant de réceptacle comprend une ouverture tournée vers l'extérieur, dans laquelle une tablette est adaptée par pression.

22. Récipient rigide hydrosoluble suivant l'une quelconque des revendications 8 à 30, dans lequel la partie de fermeture est constituée d'une matière transparente ou translucide.

23. Récipient rigide hydrosoluble suivant l'une quelconque des revendications 1 à 22, constituée intégralement ou en partie de polyvinylpyrrolidine.

24. Ensemble de récipients hydrosolubles rigides de lavage tels que définis dans l'une quelconque des revendications 1 à 23, qui sont joints les uns aux autres mais qui sont aisément séparables les uns des autres pour leur utilisation.

25. Ensemble suivant la revendication 24, l'ensemble ayant une ligne de symétrie s'étendant entre des capsules, et les deux moitiés de l'ensemble étant pliées en deux autour de la ligne de symétrie, avec les parties de fermeture en contact face à face.

26. Procédé pour la production d'un ensemble tel que défini dans la revendication 24 ou 25, procédé qui comprend :
la formation d'un ensemble de parties servant de réceptacles, chaque partie servant de réceptacle étant connectée à des parties servant de réceptacles adjacentes, mais en étant séparable de celles-ci par une action de traction ou de déchirement ; l'introduction d'une composition de lavage dans les parties servant de réceptacles ; et la fixation de manière étanche d'une feuille d'un polymère hydrosoluble sur la partie supérieure de l'ensemble pour former les parties de fermeture pour toutes les parties servant de réceptacles de l'ensemble.

27. Procédé pour la production d'un récipient suivant l'une quelconque des revendications 1 à 23, qui comprend la fusion du ou des polymères, l'injection du ou des polymères fondus dans un moule, l'enlèvement du récipient rigide hydrosoluble du moule et l'introduction de la composition pour l'entretien des étoffes, pour l'entretien de surface ou pour le lavage de la vaisselle dans le récipient.

28. Procédé suivant la revendication 27, dans lequel un premier polymère et un ou plusieurs polymères supplémentaires sont injectés simultanément ou séquentiellement dans le moule.

29. Procédé suivant la revendication 28, dans lequel le premier polymère et le ou les polymères supplémentaires sont injectés de manière séquentielle dans le moule, dans n'importe quel ordre, par une des techniques suivantes consistant en le moulage par injection de constituants multiples ou le moulage par injection en sandwich.

30. Procédé suivant la revendication 29, dans lequel le premier polymère et le ou les polymères supplémentaires sont injectés de manière séquentielle dans le moule, dans n'importe quel ordre, par moulage par injection d'un polymère ou mélange de polymères fondus dans un moule, enlèvement du polymère solide et insertion dans un second moule et par moulage par injection d'un second polymère ou mélange de polymères dans le second moule.

31. Procédé suivant la revendication 29, dans lequel le premier polymère et le ou les polymères supplémentaires sont injectés de manière séquentielle dans le moule, dans n'importe quel ordre, en moulant par injection un polymère ou un mélange de polymères fondus dans une partie d'un moule, en moulant par injection un second polymère ou mélange de polymères fondus dans une autre partie du moule.

32. Procédé suivant la revendication 29, dans lequel le premier polymère et le ou les polymères supplémentaires sont moulés par injection simultanée dans le moule sous forme d'un mélange fondu.

33. Procédé suivant l'une quelconque des revendications 27 à 32, comprenant l'étape supplémentaire de soudage du récipient.

34. Récipient rigide hydrosoluble constitué intégralement ou en partie de polymère hydrosoluble moulé par injection, récipient dans lequel est présente une composition pour l'entretien des étoffes, pour l'entretien de surfaces ou pour le lavage de la vaisselle, et dans lequel a été lié à l'intérieur ou à l'extérieur du récipient ou a été logé dans le récipient un second polymère hydrosoluble, polymère qui, à l'état dissous dans l'eau, est actif du point de vue détergeant.

35. Récipient rigide hydrosoluble suivant la revendication 34, dans lequel le second polymère est la polyvinylpyrrolidine, l'acide polyacrylique ou un de ses esters, l'acide polymaléique ou un de ses esters, ou un copolymère de n'importe lequel de ceux-ci.

36. Récipient rigide hydrosoluble suivant la revendication 34 ou 35, dans lequel le second polymère est sous forme d'un article façonné.

37. Récipient rigide hydrosoluble suivant l'une quelconque des revendications 34 à 36, le récipient étant constitué intégralement ou en partie de poly(alcool vinylique) .
